# EUROPÄISCHE PATENTSCHRIFT

(11) **EP 2 790 915 B1**
(45) Veröffentlichungstag und Bekanntmachung des Hinweises auf die Patenterteilung: **16.01.2019**
(21) Anmeldenummer: 12787450.1
(22) Anmeldetag: 19.11.2012
(51) Int. Cl.: B32B 17/10

(54) **RADARREFLEXIONSDÄMPFENDE VERGLASUNG**
RADAR REFLECTION DAMPING GLAZING
VITRE AVEC DES PROPRIETES D'AMORTISSEMENT DE REFLEXIONS RADAR

(30) Priorität: 14.12.2011 DE 102011056395
(43) Veröffentlichungstag der Anmeldung: 22.10.2014
(73) Patentinhaber: SAINT-GOBAIN DEUTSCHE GLAS GmbH, 52222 Stolberg (DE)
(72) Erfinder: SCHREIBER, Walter, 52074 Aachen (DE); RUBBERT, Frank, 52223 Stolberg (DE); FRYE, Andreas, 52067 Aachen (DE); SCHMALBUCH, Klaus, 52074 Aachen (DE); STELLING, Bernd, 52134 Herzogenrath (DE)
(74) Vertreter: Lendvai, Tomas
(86) Internationale Anmeldenummer: PCT/EP2012/072951
(87) Internationale Veröffentlichungsnummer: WO 2013/087358

(56) Entgegenhaltungen:
- EP-A2- 0 499 868
- WO-A1-2006/015817
- DE-A1- 10 313 292
- DE-A1- 19 929 081
- DE-C1- 4 340 907

## Beschreibung

Die Erfindung betrifft eine radarreflexionsdämpfende Verglasung, ein Verfahren zu deren Herstellung und deren Verwendung.

Verglasungen zur Dämpfung von Radarreflexionen sind bekannt. Solche Verglasungen werden insbesondere als Fensterscheiben hoher Gebäude in der Umgebung von Flughäfen verwendet. Reflexionen der zur Ortung von Flugzeugen verwendeten Radarstrahlung an der Gebäudefassade können dadurch vermindert werden. Da an Gebäuden reflektierte Radarstrahlung zu potentiell gefährlichen Phantomsignalen auf den Bildschirmen der Fluglotsen führen kann, wird die Sicherheit des Flugverkehrs durch radarreflexionsdämpfende Verglasungen vorteilhaft erhöht.

Viele der bekannten radarreflexionsdämpfenden Verglasungen bilden einen sogenannten Jaumann-Absorber. Dabei wird die Radarstrahlung an zwei hintereinander angeordneten Reflexionsebenen reflektiert. Die beiden reflektierten Anteile der Radarstrahlung weisen eine Phasenverschiebung relativ zueinander auf. Die Phasenverschiebung wird so eingestellt, dass die beiden reflektierten Anteile der Radarstrahlung destruktiv interferieren und die insgesamt von der Verglasung reflektierte Radarstrahlung somit ausgelöscht oder gedämpft wird. Der Grad der Dämpfung wird über die Amplitudenanpassung der beiden sich überlagernden Teilwellen erhöht.

Zumindest eine der beiden Reflexionsebenen kann in Form dünner Drähte realisiert werden, die in den Zwischenschichten eines Verbundglases eingelagert sind. Solche Lösungen sind beispielsweise aus DE 199 29 081 C2 und DE 42 27 032 C1 bekannt. Aufgrund der Verwendung von Drähten sowie des Belegens der Zwischenschichten mit den Drähten erfordern solche Verglasungen allerdings aufwendige und kostenintensive Herstellungsverfahren.

Eine Reflexionsebene kann auch durch auf einer Glasscheibe aufgedruckte und teilweise eingebrannte elektrisch leitfähige Strukturen realisiert werden. Solche Lösungen sind beispielsweise aus DE 203 04 806 U1, DE 103 13 292 A1 und DE 10 2004 038 448 B3 bekannt. Aufgedruckte elektrisch leitfähige Strukturen wirken für einen Betrachter allerdings häufig unästhetisch und störend. Die aufgedruckten Strukturen werden zudem bevorzugt auf die zur inneren Scheibe hingewandte Oberfläche der äußeren Scheibe einer Isolierverglasung aufgebracht. Daraus ergibt sich allerdings eine mangelhafte Kombinierbarkeit mit anderen funktionellen Beschichtungen, insbesondere Sonnenschutzbeschichtungen. Eine solche Sonnenschutzbeschichtung muss zum Erreichen ihrer optimalen Wirkungsweise ebenfalls auf der zur inneren Scheibe hingewandten Oberfläche der äußeren Scheibe einer Isolierverglasung aufgebracht sein. Bei einer Kombination der beiden Technologien müssen also Wirksamkeitseinbußen entweder der radarreflexionsdämpfenden Wirkung oder der Sonnenschutzwirkung in Kauf genommen werden.

Aus DE 41 03 458 A1 ist eine Verglasung bekannt, bei der jede der beiden Reflexionsebenen des Jaumann-Absorbers durch eine flächige elektrisch leitfähige Beschichtung auf einer Glasscheibe gebildet wird. Solche Lösungen haben den Nachteil, dass aufgrund der unveränderlichen Impedanz der elektrisch leitfähigen Beschichtungen nur wenige Kombinationen von Beschichtungen zur Dämpfung der Reflexion von Radarstrahlung in einem bestimmten Frequenzbereich realisiert werden können. Die Beschichtung auf der äußeren Scheibe beeinflusst entscheidend die Optik, insbesondere die Farbgebung der Gebäudefassade. Wird die Beschichtung nach den Erfordernissen der Radarreflexionsdämpfung ausgewählt, so ist eine freie Wahl der optischen Erscheinung der Gebäudefassade, beispielsweise nach ästhetischen Gesichtspunkten nicht möglich.

Aus DE 43 40 907 C1 ist eine Verglasung bekannt, bei der eine Reflexionsebene des Jaumann-Absorbers durch streifenartig aufgedampfte Metallschichten realisiert wird, wobei der Abstand zwischen den Streifen 30 mm bis 200 mm beträgt. Soll die Verglasung mit einer weiteren Funktionalität versehen werden, beispielsweise einer Sonnenschutzfunktion, so wird vorgeschlagen, die breiten Bereiche zwischen den streifenartigen Metallschichten mit einer weiteren Beschichtung, beispielsweise einer Sonnenschutzschicht aus Metalloxiden, zu versehen. Dadurch wird die Herstellung der Verglasung erschwert, was aufwendigere und kostenintensivere Herstellungsverfahren erfordert.

Die Aufgabe der vorliegenden Erfindung ist es, eine radarreflexionsdämpfende Verglasung bereitzustellen, die mit anderen funktionellen Beschichtungen optimal kombinierbar ist und die eine freie optische, insbesondere farbliche Gestaltung erlaubt.

Die Aufgabe der vorliegenden Erfindung wird erfindungsgemäß durch eine radarreflexionsdämpfende Verglasung gemäß dem unabhängigen Anspruch 1 gelöst. Bevorzugte Ausführungen gehen aus den Unteransprüchen hervor.

Die erfindungsgemäße radarreflexionsdämpfende Verglasung umfasst zumindest die folgenden Merkmale:
- ein erstes Substrat und ein flächenmäßig über dem ersten Substrat angeordnetes zweites Substrat,
- eine erste radarreflektierende Struktur auf der außenseitigen Oberfläche oder auf der innenseitigen Oberfläche des ersten Substrats und
- eine zweite radarreflektierende Struktur auf der innenseitigen Oberfläche oder auf der außenseitigen Oberfläche des zweiten Substrats,
wobei die erste radarreflektierende Struktur eine elektrisch leitfähige Beschichtung ist, in die linienförmige entschichtete Bereiche mit einer Linienbreite von kleiner oder gleich 1 mm eingebracht sind.

Mit außenseitige Oberfläche wird diejenige Oberfläche eines Substrats bezeichnet, die vom anderen Substrat abgewandt ist. Mit innenseitige Oberfläche wird diejenige Oberfläche eines Substrats bezeichnet, die zum anderen Substrat hingewandt ist.

Durch die erfindungsgemäße radarreflexionsdämpfende Verglasung wird ein Jaumann-Absorber gebildet, wobei die erste radarreflektierende Struktur und die zweite radarreflektierende Struktur jeweils eine der beiden notwendigen Reflexionsebenen der Radarstrahlung bilden.

Mit radarreflektierender Struktur wird im Sinne der Erfindung eine Struktur bezeichnet, die Radarstrahlung zumindest teilweise reflektiert. Insbesondere weist eine radarreflektierende Struktur im Sinne der Erfindung einen Reflexionsgrad von größer 10% im Frequenzbereich der Radarstrahlung auf, insbesondere im Frequenzbereich von 1,03 GHz bis 1,09 GHz. Eine radarreflektierende Struktur im Sinne der Erfindung kann auch als radarreflektierendes Element bezeichnet werden.

Unter einem entschichteten Bereich ist im Sinne der Erfindung ein beschichtungsfreier Bereich zu verstehen. Sind in eine Beschichtung entschichtete Bereiche eingebracht, so bedeutet dies im Sinne der Erfindung, dass die Bereiche frei von der Beschichtung sind, unabhängig davon, ob eine tatsächlicher Entschichtungsschritt stattgefunden hat oder ob die Beschichtung direkt beim Aufbringen mit den beschichtungsfreien Bereichen versehen wurde.

Die beiden an jeweils einer Reflexionsebene reflektierten oder transmittierten Anteile der Radarstrahlung können miteinander interferieren. Beträgt der Phasenunterschied zwischen den beiden an den zwei Reflexionsebenen reflektierten Anteilen der Radarstrahlung 180°, liegt also ein Gangunterschied von einem ungeradzahligen Vielfachen der halben Wellenlänge der Radarstrahlung vor, so ist die Interferenz destruktiv und die insgesamt von der erfindungsgemäßen Verglasung reflektierte und transmittierte Radarstrahlung wird gedämpft. Der zur Nutzung der destruktiven Interferenz nötige Phasenunterschied zwischen den beiden an den zwei Reflexionsebenen reflektierten Anteilen der Radarstrahlung kann durch eine entsprechende Laufstreckendifferenz der beiden Teilwellen generiert werden.

Es hat sich überraschend gezeigt, dass der Anteil der Radarstrahlung, der an der elektrisch leitfähigen Beschichtung als erste radarreflektierende Struktur reflektiert beziehungsweise transmittiert wird, durch die entschichteten Bereiche beeinflusst werden kann. Die Impedanz der teilreflektierenden elektrisch leitfähigen Beschichtung wird durch die entschichteten Bereiche geeignet so gewählt, dass die beiden an den zwei Reflexionsebenen der erfindungsgemäßen Verglasung reflektierten Teilwellen identische Amplituden aufweisen und die Resultierende so deutlich geschwächt bzw. sogar ausgelöscht wird.

Es hat sich weiter überraschend gezeigt, dass durch die entschichteten Bereiche innerhalb der erfindungsgemäßen elektrisch leitfähigen Beschichtung als erste radarreflektierende Struktur bei der Teilreflexion von Radarstrahlung eine Phasenverschiebung der entsprechenden Teilradarwelle hervorgerufen wird. Dadurch ist zum Erreichen von destruktiver Interferenz zwischen dem an der ersten Reflexionsebene reflektierten Anteil der Radarstrahlung und dem an der zweiten Reflexionsebene reflektierten Anteil der Radarstrahlung ein geringerer Abstand zwischen den beiden Reflexionsebenen nötig. Die erfindungsgemäße radarreflexionsdämpfende Verglasung kann somit vorteilhaft dünn gestaltet werden.

Nach dem Stand der Technik kann eine Reflexionsebene der Radarstrahlung beispielsweise durch Siebdruck-Strukturen oder dünne Drähte gebildet werden. Bei diesen Lösungen wird die Reflexion der Radarstrahlung also durch eigens zu diesem Zweck aufgebrachte Elemente erreicht und beeinflusst. Im Gegensatz dazu wird erfindungsgemäß die Art der Reflexion und Transmission an der elektrisch leitfähigen Beschichtung als erste radarreflektierende Struktur durch die entschichteten Bereiche bestimmt. Weist die elektrisch leitfähige Beschichtung neben der Reflexion von Radarstrahlung eine weitere Funktionalität auf, so wird diese weitere Funktionalität durch die entschichteten Bereiche nicht oder kaum verringert. Die elektrisch leitfähige Beschichtung kann beispielsweise eine Sonnenschutzschicht sein, die durch die entschichteten Bereiche zusätzlich die erfindungsgemäßen Eigenschaften hinsichtlich der Radarreflexion erhält. Sonnenschutzschicht und eine Reflexionsebene der Radarstrahlung sind somit durch dasselbe Element realisiert. Bei den Lösungen nach dem Stand der Technik mittels Siebdruck-Strukturen oder dünner Drähte müssen Sonnenschutzschicht und Reflexionsebene der Radarstrahlung als voneinander getrennte Elemente in die Verglasung eingebracht werden. Dabei ist eine Abwägung im Hinblick auf die radarreflexionsdämpfende Wirkung und die Sonnenschutzwirkung bei der Wahl der Positionierung von Sonnenschutzschicht und Reflexionsebene der Radarstrahlung innerhalb der Verglasung notwendig. Eine solche Abwägung ist bei der erfindungsgemäßen radarreflexionsdämpfenden Verglasung nicht notwendig. Das ist ein großer Vorteil der vorliegenden Erfindung.

Die beiden Reflexionsebenen können nach dem Stand der Technik alternativ durch flächige elektrisch leitfähige Beschichtungen gebildet werden. Diese Beschichtungen müssen nach den Erfordernissen der Radarreflexionsdämpfung ausgewählt werden. Weitere funktionelle Eigenschaften der Beschichtungen, beispielsweise Sonnenschutz- oder Wärmeschutzeigenschaften sowie die Farbgebung der Beschichtungen sind dadurch festgelegt und nicht frei wählbar. Durch die erfindungsgemäßen entschichteten Bereiche können die radarreflektierenden Eigenschaften der elektrisch leitfähigen Beschichtung als erste radarreflektierende Struktur beeinflusst werden. Die elektrisch leitfähige Beschichtung kann daher nach weiteren Anforderungen an die Verglasung, beispielsweise Sonnenschutz- oder Wärmeschutzeigenschaften oder Farbgebung ausgewählt werden. Das ist ein weiterer großer Vorteil der Erfindung.

Die radarreflexionsdämpfende Verglasung ist bevorzugt so ausgerichtet, dass das erste Substrat zum Sender der Radarstrahlung hingewandt ist. Die elektrisch leitfähige Beschichtung auf dem ersten Substrat bildet somit in Fortpflanzungsrichtung der einfallenden Radarstrahlung die räumlich vordere Reflexionsebene der Radarstrahlung. Damit werden besonders vorteilhafte radarreflexionsdämpfende Eigenschaften erreicht.

In die elektrisch leitfähige Beschichtung auf dem ersten Substrat sind erfindungsgemäß linienförmige entschichtete Bereiche eingebracht. Die Linienbreite der entschichteten Bereiche beträgt erfindungsgemäß kleiner oder gleich 1 mm, bevorzugt kleiner oder gleich 500 µm, besonders bevorzugt kleiner oder gleich 300 µm. Die Linienbreite der entschichteten Bereiche beträgt bevorzugt größer oder gleich 10 µm, besonders bevorzugt größer oder gleich 30 µm und ganz besonders bevorzugt größer oder gleich 50 µm. Damit werden besonders gute Ergebnisse erzielt. In diesem Bereich für die Linienbreite der entschichteten Bereiche werden zum einen besonders vorteilhafte radarreflektierende Eigenschaften erreicht. Zum anderen wird eine weitere Funktionalität der Beschichtung, beispielsweise eine Sonnenschutzfunktion, nicht merklich herabgesetzt.

In einer vorteilhaften Ausgestaltung der Erfindung sind die entschichteten Bereiche als geradlinige, parallel zueinander angeordnete Streifen ausgeformt. Die einzelnen Streifen können dabei bevorzugt durchlaufend oder aber auch unterbrochen sein. Die einzelnen Streifen können von einer Kante der elektrisch leitfähigen Beschichtung zur gegenüberliegenden Kante verlaufen. Die einzelnen Streifen müssen sich aber nicht bis zu den Kanten der elektrisch leitfähigen Beschichtung erstrecken, sondern können in der Ebene der elektrisch leitfähigen Beschichtung vollständig von der elektrisch leitfähigen Beschichtung umgeben sein.

Jeder der parallel zueinander angeordneten, geradlinigen entschichteten Bereiche weist eine Breite von kleiner oder gleich 1 mm, bevorzugt von kleiner oder gleich 500 µm, besonders bevorzugt von 50 µm bis 300 µm auf. Der Abstand zweier benachbarter Streifen beträgt bevorzugt von 2 mm bis 100 mm, besonders bevorzugt von 20 mm bis 40 mm. Die entschichteten Bereiche sind bevorzugt äquidistant angeordnet. Es können aber auch unterschiedliche Abstände zwischen benachbarten entschichteten Bereichen vorliegen.

Der Winkel zwischen der Orientierung der linienförmigen entschichteten Bereiche und dem elektrischen Feldstärkevektor der Radarstrahlung beträgt bevorzugt von 70° bis 90°, besonders bevorzugt von 80° bis 90°, insbesondere 90°. In diesem Bereich wird eine besonders gute Radarreflexionsdämpfung der erfindungsgemäßen Verglasung erzielt. Da Radaranlagen zur Überwachung des Luftverkehrs im Bereich eines Flughafens typischerweise vertikal polarisierte Strahlung aussenden, weisen die entschichteten Streifen in Einbaulage der Verglasung bevorzugt eine horizontale Orientierung auf.

Der Phasenunterschied zwischen der an der ersten Reflexionsebene reflektierten Radarstrahlung und der an der zweiten Reflexionsebene reflektierten Radarstrahlung wird einerseits durch den Abstand der beiden Reflexionsebenen zueinander und andererseits durch die bei der Reflexion an der elektrisch leitfähigen Beschichtung hervorgerufenen Phasenverschiebung bestimmt. Die bei der Reflexion an der elektrisch leitfähigen Beschichtung auf dem ersten Substrat hervorgerufene Phasenverschiebung kann durch die Breite der entschichteten Linien und den Abstand zwischen benachbarten entschichteten Linien beeinflusst werden. Eine Optimierung der radarreflexionsdämpfenden Wirkung der erfindungsgemäßen Verglasung auf die Frequenz der Radarstrahlung kann durch die Wahl des Abstandes zwischen den Reflexionsebenen sowie durch die Wahl von Breite und Abstand der entschichteten Linien erfolgen. Die Phasenverschiebung hängt außerdem vom Flächenwiderstand der elektrisch leitfähigen Beschichtung ab. Eine relativ große Toleranz im Hinblick auf den Flächenwiderstand ermöglicht die ästhetische Anpassung der Farbwirkung durch den Architekten. Die radarreflexionsdämpfende Wirkung kann so hervorragend den Erfordernissen im Einzelfall angepasst werden. Der erforderliche Abstand zwischen den Reflexionsebenen und die Gestaltung der Schicht zur optimalen Reflexionsdämpfung von Radarstrahlung einer gegebenen Frequenz können vom Fachmann durch Versuche oder Simulationen ermittelt werden.

Die entschichteten Bereiche können auch in Form von nicht miteinander verbundenen Strukturen, deren Längenausdehnung deutlich geringer ist als die Ausdehnung der elektrisch leitfähigen Beschichtung, in die elektrisch leitfähige Beschichtung eingebracht sein. Solche Strukturen werden im Folgenden als diskontinuierliche Strukturen bezeichnet. Die diskontinuierlichen Strukturen können geradlinig gestaltet sein. Grundsätzlich können die Strukturen aber beliebige Formen annehmen, beispielsweise gekrümmte Streifen, Bögen, geschlossene oder offene Kurven, geschlossenen Polygone oder offene Polygonzüge, Kreuze oder Sterne.

Die entschichteten Bereiche in Form diskontinuierlicher Strukturen weisen bevorzugt eine Länge von 20 mm bis 300 mm, einen axialen freien Abstand zwischen zwei benachbarten entschichteten Bereichen von 5 mm bis 150 mm sowie einen seitlichen Abstand von 2 bis 100 mm auf. Damit werden besonders gute radarreflexionsdämpfende Eigenschaften erzielt. Die entschichteten Bereiche können auch als Kombinationen der genannten Ausführungen gestaltet sein.

Die Gesamtfläche aller entschichteten Bereiche beträgt erfindungsgemäß höchstens 5 % der Fläche der elektrisch leitfähigen Beschichtung. Die Gesamtfläche aller entschichteten Bereiche beträgt bevorzugt zwischen 0,2 % und 1 % der Fläche der elektrisch leitfähigen Beschichtung. Damit werden besonders gute Ergebnisse erzielt.

Die elektrisch leitfähige Beschichtung auf dem ersten Substrat ist bevorzugt im sichtbaren Spektralbereich transparent. Dadurch wirkt die elektrisch leitfähige Beschichtung (und die von ihr gebildete erste radarreflektierende Struktur) für einen Betrachter nicht unästhetisch oder störend und die Durchsicht durch die Verglasung wird nicht störend vermindert. Eine Beschichtung gilt im Sinne der Erfindung insbesondere dann als transparent, wenn ein Floatglas mit einer Dicke von 4 mm, welches mit der Beschichtung versehen ist, eine Lichtdurchlässigkeit TL von größer oder gleich 40% aufweist, beispielsweise von 40% bis 80%. Die Beschichtung selbst weist beispielsweise eine Transmission im sichtbaren Spektralbereich von größer oder gleich 70% auf.

Die elektrisch leitfähige Beschichtung auf dem ersten Substrat ist bevorzugt eine funktionelle Beschichtung, besonders bevorzugt eine funktionelle Beschichtung mit SonnenschutzWirkung. Eine Beschichtung mit Sonnenschutzwirkung weist reflektierende Eigenschaften im Infrarot-Bereich und / oder im Bereich der Sonneneinstrahlung auf. Dadurch wird die Aufheizung des Inneren eines Gebäudes, das mit der erfindungsgemäßen Verglasung versehen ist, infolge der Sonnenstrahlung vorteilhaft vermindert. Solche Beschichtungen sind dem Fachmann bekannt und enthalten typischerweise zumindest ein Metall, insbesondere Silber oder eine silberhaltige Legierung. Die elektrisch leitfähige Beschichtung kann eine Abfolge mehrerer Einzelschichten umfassen, insbesondere zumindest eine metallische Schicht und dielektrische Schichten, die beispielsweise zumindest ein Metalloxid enthalten. Die elektrisch leitfähige Beschichtung weist bevorzugt eine Schichtdicke von 10 nm bis 5 µm, besonders bevorzugt von 30 nm bis 1 µm auf.

Der Flächenwiderstand der elektrisch leitfähigen Beschichtung beträgt bevorzugt von 0,1 Ω/Quadrat bis 200 Ω/Quadrat, besonders bevorzugt von 0,1 Ω/Quadrat bis 30 Ω/Quadrat und ganz besonders bevorzugt von 1 Ω/Quadrat bis 20 Ω/Quadrat. Der Flächenwiderstand der elektrisch leitfähigen Beschichtung beträgt insbesondere von 1 Ω/Quadrat bis 10 Ω/Quadrat, ganz besonders bevorzugt von 1 Ω/Quadrat bis 8 Ω/Quadrat. In diesem Bereich für den Flächenwiderstand der elektrisch leitfähigen Beschichtung werden mit den erfindungsgemäßen linienförmigen entschichteten Bereichen besonders gute radarreflexionsdämpfenden Eigenschaften erzielt. Der Flächenwiderstand der elektrisch leitfähigen Beschichtung beträgt in einer vorteilhaften Ausgestaltung der Erfindung kleiner 5 Ω/Quadrat, beispielsweise von 2 Ω/Quadrat bis 4 Ω/Quadrat.

Das Einbringen der erfindungsgemäßen entschichteten Bereiche kann auch zur Verfeinerung der Lösung nach dem Stand der Technik dienen, bei der beide Reflexionsebenen durch elektrisch leitfähige Beschichtungen realisiert sind. Für eine solche Lösung wird in DE 41 03 458 A1 für die vordere Reflexionsebene ein hoher Flächenwiderstand von 100 Ω/Quadrat bis 600 Ω/Quadrat vorgeschlagen. Die frequenzabhängigen Eigenschaften der Beschichtung müssen bei dieser Lösung möglichst genau mit dem Frequenzbereich der Radarstrahlung in Übereinstimmung gebracht werden. Erschwert wird dies oft durch die konkreten Bedingungen vor Ort und durch Toleranzen in der industriellen Fertigung der Beschichtungen. Durch die Gestaltung der entschichteten Bereiche ist eine Feinabstimmung der Impedanz beziehungsweise des Flächenwiderstandes nach der Beschichtung der Gläser möglich. Damit kann eine Stabilisierung des Produktionsprozesses erreicht werden, der dadurch wesentlich wirtschaftlicher wird. Die Nutzung von Beschichtungen mit hohem Flächenwiderstand hat den weiteren Vorteil, dass sie optisch unauffälliger sind, da die Dicke solcher Beschichtungen reduziert ist.

Die erfindungsgemäße zweite radarreflektierende Struktur ist in einer bevorzugten Ausgestaltung der Erfindung als flächige elektrisch leitfähige Beschichtung auf eine Oberfläche des zweiten Substrats aufgebracht. Flächig bedeutet, dass die Beschichtung eine geschlossene Fläche bildet, also keine entschichteten Bereich in die Beschichtung eingebracht sind. Die elektrisch leitfähige Beschichtung muss aber nicht die gesamte Oberfläche des zweiten Substrats bedecken. Insbesondere kann der Randbereich der Oberfläche des zweiten Substrats umlaufend ohne elektrisch leitfähige Beschichtung ausgestaltet sein. Dadurch kann die elektrisch leitfähige Beschichtung vorteilhaft vor Korrosion und weiteren Umwelteinflüssen geschützt werden. Die flächige elektrisch leitfähige Beschichtung als zweite radarreflektierende Struktur ist bevorzugt im sichtbaren Spektralbereich transparent. Dadurch wird die Durchsicht durch die erfindungsgemäße Verglasung nicht störend vermindert.

Die flächige elektrisch leitfähige Beschichtung als zweite radarreflektierende Struktur ist bevorzugt für Radarstrahlung undurchlässig, reflektiert also den auf sie treffenden Anteil der Radarstrahlung komplett. In diesem Fall muss die zweite radarreflektierende Struktur natürlich die in Ausbreitungsrichtung der einfallenden Radarstrahlung hintere Reflexionsebene bilden. Der Innenraum eines Gebäudes, das mit der radarreflexionsdämpfenden Verglasung versehen ist, wird so vorteilhaft vor Radarstrahlung geschützt, da keine Radarstrahlung die Verglasung komplett durchdringen kann.

Die zweite radarreflektierende Struktur ist bevorzugt eine funktionelle Beschichtung, besonders bevorzugt eine funktionelle Beschichtung mit Wärmeschutzwirkung. Eine solche Beschichtung mit Wärmeschutzwirkung reflektiert Strahlung im Infrarot-Bereich, insbesondere im fernen Infrarotbereich. Solche Beschichtungen sind dem Fachmann bekannt und enthalten typischerweise zumindest ein Metall, insbesondere Silber. Es kann auch eine Abfolge mehrere Einzelschichten vorliegen, insbesondere zumindest eine metallische Schicht und dielektrische Schichten, die beispielsweise zumindest ein Metalloxid enthalten. Die elektrisch leitfähige Beschichtung auf dem zweiten Substrat weist bevorzugt eine Schichtdicke von 10 nm bis 5 µm, besonders bevorzugt von 30 nm bis 1 µm auf. Der Flächenwiderstand der elektrisch leitfähigen Beschichtung auf dem zweiten Substrat beträgt bevorzugt von 0,1 Ω/Quadrat bis 200 Ω/Quadrat, besonders bevorzugt von 0,1 Ω/Quadrat bis 30 Ω/Quadrat und ganz besonders bevorzugt von 1 Ω/Quadrat bis 20 Ω/Quadrat. In diesem Bereich für den Flächenwiderstand der elektrisch leitfähigen Beschichtung werden besonders gute radarreflexionsdämpfenden Eigenschaften erzielt.

Die elektrisch leitfähige Beschichtung auf dem zweiten Substrat kann alternativ aber auch entschichtete Bereiche aufweisen.

Die zweite radarreflektierende Struktur kann alternativ auch durch aufgedruckte und teilweise eingebrannte Leiterstrukturen realisiert sein, die nach dem Stand der Technik als Reflexionsebenen in Jaumann-Absorbern bekannt sind. Die Leiterstrukturen weisen dabei bevorzugt einen Metall-, insbesondere Silbergehalt von größer als 75%, besonders bevorzugt größer als 85%. Solche Leiterstrukturen können beispielsweise im SiebdruckVerfahren auf eine Oberfläche des zweiten Substrats aufgebracht werden.

Die zweite radarreflektierende Struktur kann alternativ auch in Form dünner Drähte realisiert sein, die in einer mit einer Oberfläche des zweiten Substrats verbundenen Polymerfolie eingelagert oder auf eine solche Polymerfolie aufgebracht sind.

Das erste Substrat und das zweite Substrat sind erfindungsgemäß dielektrisch (elektrisch nicht leitfähig). Das erste und das zweite Substrat sind bevorzugt für sichtbares Licht und Radarstrahlung transparent. Das erste Substrat und das zweite Substrat enthalten bevorzugt vorgespanntes, teilvorgespanntes oder nichtvorgespanntes Glas, besonders bevorzugt Flachglas, Floatglas, Quarzglas, Borosilikatglas, Kalk-Natron-Glas, oder klare Kunststoffe, insbesondere Polyethylen, Polypropylen, Polycarbonat, Polymethylmethacrylat, Polystyrol, Polyamid, Polyester, Polyvinylchlorid und / oder Gemische davon.

Die Dicken des ersten Substrats und des zweiten Substrats können breit variieren und so den Erfordernissen im Einzelfall angepasst werden. Das erste Substrat und das zweite Substrat weisen bevorzugt Dicken von 1 mm bis 15 mm und besonders bevorzugt von 2 mm bis 10 mm auf. Die Dicke des ersten Substrats und die Dicke des zweiten Substrats können gleich oder unterschiedlich sein. Die Fläche des ersten Substrats und des zweiten Substrats kann breit variieren, beispielsweise von 100 cm² bis 20 m². Bevorzugt weist das erste Substrat und das zweite Substrat eine Fläche von 400 cm² bis 6 m² auf, wie sie für Verglasungen von Fahrzeugen und von Bau- und Architekturverglasungen üblich sind.

Das erste Substrat und das zweite Substrat können eine beliebige dreidimensionale Form aufweisen. Das erste Substrat und das zweite Substrat sind bevorzugt plan oder leicht oder stark in einer Richtung oder in mehreren Richtungen des Raumes gebogen.

Die Oberflächen des ersten Substrats und des zweiten Substrats, auf welchen die erste radarreflektierende Struktur beziehungsweise die zweite radarreflektierende Struktur angeordnet sind, sind bevorzugt glatt. Dadurch wird ein besonders ästhetisches Erscheinungsbild der Verglasung erreicht.

In einer vorteilhaften Ausgestaltung der Erfindung sind das erste Substrat und das zweite Substrat über einen oder mehrere Abstandshalter zu einer Isolierverglasung verbunden. Das erste Substrat und das zweite Substrat sind bevorzugt über einen Abstandshalter rundum zu einer Isolierverglasung verbunden. Die beiden Substrate weisen bevorzugt einen Abstand zueinander von 30 mm bis 300 mm auf. Der Zwischenraum zwischen beiden Substraten kann ein Gas oder ein Gasgemisch enthalten, beispielsweise Luft oder Inertgase wie Argon, Krypton oder Stickstoff. Alternativ kann der Zwischenraum evakuiert sein oder im Zwischenraum kann ein Unterdruck sein, das heißt ein Druck, der niedriger als der Atmosphärendruck der Umgebung ist.

Die leitfähige Beschichtung mit den entschichteten Bereichen ist bevorzugt auf der innenseitigen Oberfläche des ersten Substrats angeordnet. Die zweite radarreflektierende Struktur ist bevorzugt auf der innenseitigen Oberfläche des zweiten Substrats angeordnet. Dabei sind beide radarreflektierende Strukturen vorteilhaft vor Umwelteinflüssen wie beispielsweise mechanischer Beschädigung und Korrosion geschützt.

Die außenseitige Oberfläche des zweiten Substrats kann über zumindest einen weiteren Abstandshalter mit einer weiteren Scheibe verbunden sein. Alternativ kann die außenseitige Oberfläche des ersten Substrats über zumindest einen weiteren Abstandshalter mit einer weiteren Scheibe verbunden sein. In diesen Fällen bildet die erfindungsgemäße radarreflexionsdämpfende Verglasung eine Dreifach-Isolierverglasung. Eine Dreifach-Isolierverglasung kann auch realisiert werden, indem zwischen dem ersten Substrat und dem zweiten Substrat eine weitere Scheibe angeordnet wird und über Abstandshalter mit den Substraten verbunden wird. Natürlich sind auch Isolierverglasungen mit mehr als drei Scheiben im Rahmen der vorliegenden Erfindung realisierbar.

Die außenseitige Oberfläche des ersten Substrats und / oder des zweiten Substrats kann auch über zumindest eine thermoplastische Zwischenschicht mit einer weiteren Scheibe zu einem Verbund-Sicherheitsglas verbunden sein.

In einer weiteren vorteilhaften Ausgestaltung der Erfindung sind das erste Substrat und das zweite Substrat über zumindest eine thermoplastische Zwischenschicht zu einem Verbundglas verbunden. Die elektrisch leitfähige Beschichtung mit den entschichteten Bereichen ist bevorzugt auf der innenseitigen Oberfläche des ersten Substrats angeordnet. Die zweite radarreflektierende Struktur ist bevorzugt auf der außenseitigen Oberfläche des zweiten Substrats angeordnet. Der Abstand zwischen den beiden Reflexionsebenen kann dann durch die Wahl der Dicke der thermoplastischen Zwischenschicht und der Dicke des zweiten Substrats festgelegt werden.

Die thermoplastische Zwischenschicht enthält bevorzugt zumindest einen thermoplastischen Kunststoff, wie Polyvinylbutyral (PVB) oder Ethylenvinylacetat (EVA) oder mehrere Schichten davon, bevorzugt mit Dicken von 0,3 mm bis 3 mm. Damit werden besonders gute Ergebnisse erzielt.

Das Verbundglas aus erstem Substrat und zweitem Substrat kann auch Teil einer Isolierverglasung sein. Dabei ist die außenseitige Oberfläche des ersten Substrats und / oder des zweiten Substrats über zumindest einen Abstandshalter mit einer weiteren Scheibe verbunden.

Die außenseitige Oberfläche des ersten Substrats und / oder des zweiten Substrats kann auch über zumindest eine weitere thermoplastische Zwischenschicht mit einer weiteren Scheibe verbunden sein.

Zwischen dem ersten Substrat und dem zweiten Substrat kann auch eine weitere Scheibe angeordnet sein, die über zumindest eine Zwischenschicht mit dem ersten Substrat und über zumindest eine weitere Zwischenschicht mit dem zweiten Substrat verbunden ist.

Die Aufgabe der vorliegenden Erfindung wird weiter erfindungsgemäß durch ein Verfahren zur Herstellung einer radarreflexionsdämpfenden Verglasung gelöst, wobei zumindest:
a) auf ein erstes Substrat eine elektrisch leitfähige Beschichtung mit linienförmigen entschichteten Bereichen mit einer Linienbreite von kleiner oder gleich 1 mm als erste radarreflektierende Struktur aufgebracht wird und
b) das erste Substrat und ein mit einer zweiten radarreflektierenden Struktur versehenes zweites Substrat flächenmäßig übereinander verbunden werden.

Die elektrisch leitfähige Beschichtung wird in Verfahrensschritt (a) bevorzugt flächig durch Kathodenzerstäuben, Aufdampfen oder chemische Gasphasenabscheidung (chemical vapour deposition, CVD) auf eine Oberfläche des ersten Substrats aufgebracht. Anschließend werden die entschichteten Bereiche in die erste elektrisch leitfähige Beschichtung eingebracht, beispielsweise mittels Plasmaätzen, mechanischer oder nasschemischer Verfahren, bevorzugt mittels Laserablation oder Laserentschichtung. Damit können die entschichteten Bereiche besonders vorteilhaft mit hoher Präzision und geringer Linienbreite in die elektrisch leitfähige Beschichtung eingebracht werden.

Die entschichteten Bereiche können alternativ durch Maskierungstechniken direkt beim Aufbringen der elektrisch leitfähigen Beschichtung bereitgestellt werden.

Die radarreflexionsdämpfende Verglasung wird bevorzugt als Fensterscheibe von Gebäuden oder von Fortbewegungsmitteln für den Verkehr auf dem Lande, in der Luft oder zu Wasser verwendet, insbesondere als Fensterscheibe oder Fassadenverkleidung von Hochhäusern in der Umgebung von Flughäfen.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Fig. 1: einen Querschnitt durch eine erste Ausgestaltung der erfindungsgemäßen radarreflexionsdämpfenden Verglasung,
- Fig. 2: einen Querschnitt durch eine weitere Ausgestaltung der erfindungsgemäßen radarreflexionsdämpfenden Verglasung,
- Fig. 3: eine Draufsicht auf die innenseitige Oberfläche des ersten Substrats mit der elektrisch leitfähigen Beschichtung gemäß der Figur 1,
- Fig. 4: eine Draufsicht auf eine alternative Ausgestaltung der innenseitigen Oberfläche des ersten Substrats mit der elektrisch leitfähigen Beschichtung,
- Fig. 5: ein Diagramm der Dämpfung der Radarreflexion in Abhängigkeit von der Frequenz der Radarstrahlung aus einer Testmessung,
- Fig. 6: ein Diagramm der mittleren Dämpfung der Radarreflexion im Frequenzbereich von 1,03 GHz bis 1,09 GHz in Abhängigkeit vom Winkel zwischen dem elektrischen Feldstärkevektor und der Orientierung der entschichteten Bereiche aus einer weiteren Testmessung und
- Fig. 7: ein detailliertes Flussdiagramm des erfindungsgemäßen Verfahrens zur Herstellung einer radarreflexionsdämpfenden Verglasung.

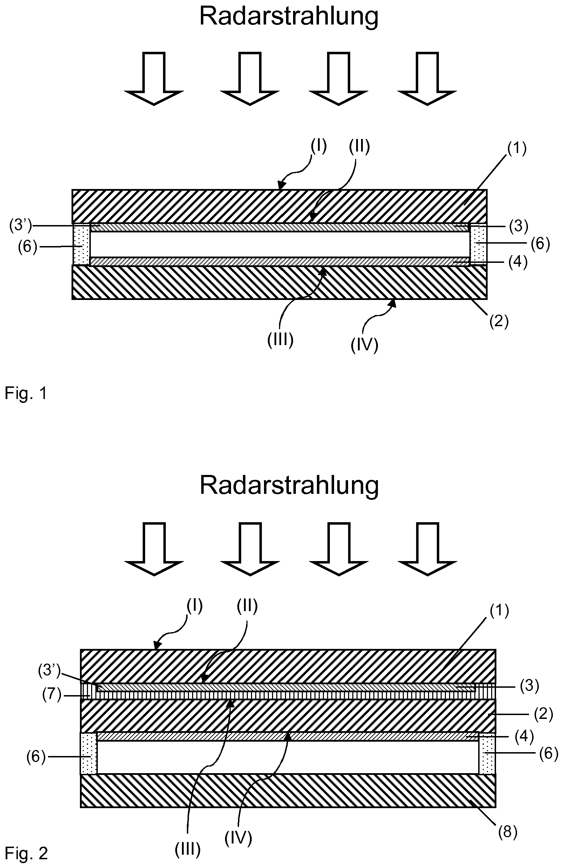

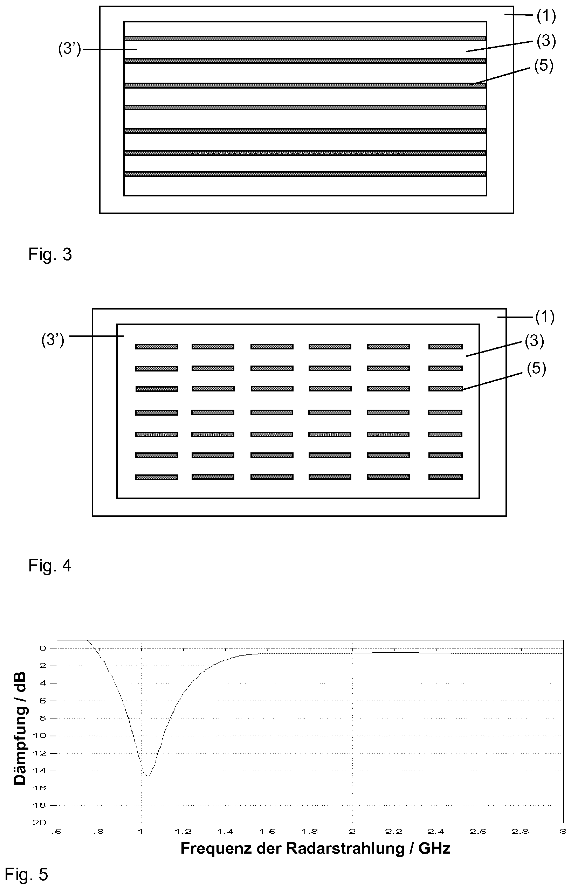

Fig. 1 und Fig. 3 zeigen je ein Detail einer erfindungsgemäßen radarreflexionsdämpfenden Verglasung. Das erste Substrat 1 und das zweite Substrat 2 sind über einen Abstandshalter 6 zu einer Isolierverglasung verbunden. Das erste Substrat 1 und das zweite Substrat 2 enthalten Natron-Kalk-Glas. Das erste Substrat 1 und das zweite Substrat 2 weisen eine Dicke von 6 mm auf. Der Abstand zwischen der innenseitigen Oberfläche (II) des ersten Substrats 1 und der innenseitigen Oberfläche (III) des zweiten Substrats 2 beträgt 6 mm.

Die radarreflexionsdämpfenden Verglasung ist als Fensterscheibe bzw. Fassadenelement eines Gebäudes vorgesehen. Das erste Substrat 1 ist dabei als äußere Scheibe und das zweite Substrat 2 als innere Scheibe vorgesehen. Sowohl Sonnenlicht als auch Radarstrahlung, die beispielsweise durch die Luftraumüberwachung eines nahegelegenen Flughafens hervorgerufen wird, dringen über die außenseitige Oberfläche (I) des ersten Substrats 1 in die Isolierverglasung ein.

Auf der innenseitigen Oberfläche (II) des ersten Substrats 1 ist eine elektrisch leitfähige Beschichtung 3' als erste radarreflektierende Struktur 3 aufgebracht. Die elektrisch leitfähige Beschichtung 3' ist eine Sonnenschutzbeschichtung auf Silberbasis. Die elektrisch leitfähige Beschichtung 3' weist eine niedrige Transmission im infraroten Spektralbereich auf. Dadurch wird die Aufheizung des Gebäudes infolge der Sonnenstrahlung vermindert. Ein umlaufender Randbereich mit einer Breite von 10 mm der innenseitigen Oberfläche (II) des ersten Substrats 1 ist nicht mit der elektrisch leitfähigen Beschichtung 3' versehen. In diesem Randbereich ist der Abstandshalter 6 angeordnet. Dadurch wird die elektrisch leitfähige Beschichtung 3' vorteilhaft vor Korrosion und sonstigen Umwelteinflüssen geschützt.

In die elektrisch leitfähige Beschichtung 3' als erste radarreflektierende Struktur 3 sind entschichtete Bereiche 5 eingebracht. Die entschichteten Bereiche 5 sind als geradlinige, parallele, durchlaufende Streifen ausgeformt. Jeder Streifen weist eine Breite von etwa 200 µm auf. Der Abstand zweier benachbarter Streifen beträgt etwa 31 mm. Die entschichteten Bereiche 5 sind als regelmäßiges Raster über die gesamte Fläche der elektrisch leitfähigen Beschichtung 3' verteilt. Die in der Figur dargestellte Anzahl der entschichteten Bereiche dient nur zur schematischen Veranschaulichung. In der Realität ist die Anzahl der entschichteten Bereiche von der Größe des ersten Substrats abhängig. Die linienförmigen entschichteten Bereiche 5 sind in Einbaulage der Verglasung horizontal angeordnet. Da Radaranlagen zur Überwachung des Luftverkehrs im Bereich eines Flughafens typischerweise vertikal polarisierte Strahlung aussenden, beträgt der Winkel α zwischen dem elektrischen Feldstärke-Vektor der Radarstrahlung und der Orientierung der linienförmigen entschichteten Bereichen 5 etwa 90°. Damit werden besonders gute radarreflexionsdämpfende Eigenschaften erzielt.

Auf der innenseitigen Oberfläche (III) des zweiten Substrats 2 ist eine zweite radarreflektierende Struktur 4 in Form einer flächigen elektrisch leitfähigen Beschichtung aufgebracht. Die zweite radarreflektierende Struktur 4 ist eine transparente Wärmeschutzbeschichtung auf Silberbasis. Die Wärmeschutzbeschichtung reflektiert Strahlung des fernen Infrarotbereichs. Dadurch wird der Verlust von Heizwärme im Gebäude durch die Verglasung vorteilhaft vermindert. Ein umlaufender Randbereich mit einer Breite von 10 mm der innenseitigen Oberfläche (III) des zweiten Substrats 2 ist nicht mit der Wärmeschutzbeschichtung versehen. In diesem Randbereich ist der Abstandshalter 6 angeordnet. Dadurch wird die Wärmeschutzbeschichtung vorteilhaft vor Korrosion und sonstigen Umwelteinflüssen geschützt.

Durchtritt Radarstrahlung die erfindungsgemäße Verglasung, so dient die erste radarreflektierende Struktur 3 als vordere Reflexionsebene. Die erste radarreflektierende Struktur 3 weist aufgrund der entschichteten Bereiche 5 teilreflektierende Eigenschaften im Hinblick auf die Radarstrahlung auf. Die Reflexion an der ersten radarreflektierenden Struktur 3 führt aufgrund der entschichteten Bereiche 5 in der elektrisch leitfähigen Beschichtung 3' zu einer Phasenverschiebung des reflektierten Anteils der Radarstrahlung. Die zweite radarreflektierende Struktur 4 dient als hintere Reflexionsebene. Der auf die zweite radarreflektierende Struktur 4 auftreffende Anteil der Radarstrahlung wird komplett von der zweiten radarreflektierenden Struktur 4 reflektiert. Der an der ersten radarreflektierenden Struktur 3 reflektierte Anteil der Radarstrahlung und der an der zweiten radarreflektierende Struktur 4 reflektierte Anteil der Radarstrahlung interferieren destruktiv. Die insgesamt von der Verglasung reflektierte Radarstrahlung wird deutlich gedämpft, da die Amplituden der beiden Teilwellen infolge der Gestaltung der entschichteten Bereiche 5 in der elektrisch leitfähigen Beschichtung 3' ähnlich groß sind.

Die radarreflexionsdämpfenden Eigenschaften der erfindungsgemäßen Verglasung können durch die Wahl des Abstandes zwischen der elektrisch leitfähigen Beschichtung 3' als erste radarreflektierende Struktur 3 und der zweiten radarreflektierenden Struktur 4 sowie durch die Gestaltung der entschichteten Bereiche 5 auf die Frequenz der Radarstrahlung optimiert werden. Der Abstand zwischen den Reflexionsebenen, die Breite der linienförmigen entschichteten Bereiche 5 sowie der Abstand benachbarter entschichteter Bereiche 5 sind in dem Ausführungsbeispiel so gewählt, dass in einem Frequenzbereich der Radarstrahlung von 1,03 GHz bis 1,09 GHz eine optimale Dämpfung der Radarstrahlung erreicht wird. Die Frequenzen von Radarstrahlung zur Luftraumüberwachung in Flughäfen liegen typischerweise in diesem Bereich.

Die radarreflexionsdämpfende Verglasung kann weitere nicht dargestellte, für Isolierverglasungen übliche und dem Fachmann geläufige Elemente umfassen, beispielsweise eine Randversiegelung und / oder Trocknungsmittel. Der Abstandshalter 6 kann andere Formen aufweisen als die in der Figur schematisch dargestellte Form, beispielsweise ein U-förmiges Profil.

Fig. 2 zeigt einen Querschnitt durch eine alternative Ausgestaltung der erfindungsgemäßen radarreflektionsdämpfenden Verglasung. Das erste Substrat 1 und das zweite Substrat 2 sind über eine thermoplastische Zwischenschicht 7 zu einer Verbundglasscheibe verbunden. Das erste Substrat 1 und das zweite Substrat 2 weisen eine Dicke von etwa 4 mm auf. Die thermoplastische Zwischenschicht 7 enthält Polyvinylbutyral (PVB) und weist eine Schichtdicke von 1,52 mm auf. Auf der innenseitigen Oberfläche (II) des ersten Substrats 1 ist eine elektrisch leitfähige Beschichtung 3' mit entschichteten Bereichen 5 als erste radarreflektierende Struktur 3 aufgebracht. Auf der außenseitigen Oberfläche (IV) des zweiten Substrats 2 ist eine zweite radarreflektierende Struktur 4 aufgebracht. Die entschichteten Bereiche 5 sind als geradlinige, parallele, durchlaufende Streifen ausgeformt. Jeder Streifen weist eine Breite von etwa 200 µm auf. Der Abstand zweier benachbarter Streifen beträgt etwa 22 mm.

Die außenseitige Oberfläche (IV) des zweiten Substrats 2 ist über einen Abstandshalter 6 mit einer weiteren Glasscheibe 8 verbunden. Das Verbundglas aus erstem Substrat 1, thermoplastischer Polymerfolie 7 und zweitem Substrat 2 bildet zusammen mit der weiteren Glasscheibe 8 eine Isolierverglasung. Die zweite radarreflektierende Struktur 4 ist vorteilhaft im Zwischenraum zwischen zweitem Substrat 2 und der weiteren Glasscheibe 8 vor Beschädigung und Korrosion geschützt.

Fig. 3 zeigt eine Draufsicht auf die innenseitige Oberfläche (II) des ersten Substrats 1 gemäß Figur 1. Zu sehen ist die elektrisch leitfähige Beschichtung 3' als erste radarreflektierende Struktur 3 mit den entschichteten Bereichen 5 in Form von geradlinigen, parallelen, horizontalen, durchlaufenden Streifen.

Fig. 4 zeigt eine Draufsicht auf eine alternative Ausgestaltung der ersten radarreflektierenden Struktur 3 auf der innenseitigen Oberfläche (II) des ersten Substrats 1. Die entschichteten Bereiche 5 sind als geradlinige, horizontale, unterbrochene Streifen ausgeformt.

Fig. 5 zeigt das Ergebnis einer Testmessung der Radarreflexionsdämpfung einer erfindungsgemäßen Verglasung. Das erste Substrat 1 und das zweite Substrat 2 waren runde Scheiben aus Natrium-Kalk-Glas und wiesen eine Dicke von 6 mm und einen Durchmesser von 1 m auf. Auf eine Oberfläche des ersten Substrats 1 war eine elektrisch leitfähige Beschichtung 3' als erste radarreflektierende Struktur 3 aufgebracht. Die elektrisch leitfähige Beschichtung 3' war eine Sonnenschutzbeschichtung. Solche beschichteten Scheiben werden von der Firma Saint-Gobain unter der Produktbezeichnung SGG Cool-Lite SKN 165 vertrieben. In die elektrisch leitfähige Beschichtung 3' waren mittels Laserablation entschichtete Bereiche 5 eingebracht worden. Die entschichteten Bereiche 5 waren als durchlaufende parallele gerade Streifen ausgeformt. Die Breite der Streifen betrug etwa 200 µm und der Abstand zweier benachbarter Streifen betrug 31 mm. Die zweite radarreflektierende Struktur 4 war eine Wärmeschutzbeschichtung. Solche beschichteten Scheiben werden von der Firma Saint-Gobain unter der Produktbezeichnung SGG Planitherm Ultra N vertrieben. Die zweite radarreflektierende Struktur 4 war flächig aufgebracht, wies also keine entschichteten Bereiche 5 auf. Das erste Substrat 1 und das zweite Substrat 2 waren so fixiert, dass die beschichteten Oberflächen der Substrate 1, 2 einander zugewandt waren. Der Abstand zwischen den beschichteten Oberflächen wurde durch einen Abstandshalter auf 6 mm eingestellt.

Die Anordnung aus erstem Substrat 1 und zweitem Substrat 2 wurde durch eine Radar-Strahlungsquelle mit Radarstrahlung bestrahlt. Das erste Substrat 1 war in Richtung der einfallenden Radarstrahlung vor dem zweiten Substrat 2 angeordnet. Der Winkel α zwischen dem elektrischen Feldstärke-Vektor der Radarstrahlung und der Orientierung der linienförmigen entschichteten Bereichen 5 betrug etwa 80°. Die Intensität *I_{refl}* der reflektierten Radarstrahlung wurde mittels eines Radar-Detektors, der neben der Radar-Strahlungsquelle positioniert war, gemessen. Nach Entfernen des ersten Substrats 1 wurde eine Referenzmessung durchgeführt. In der Referenzmessung wurde die Intensität *I₀* der an der zweiten radarreflektierenden Struktur 4 in Abwesenheit der ersten radarreflektierenden Struktur 3 reflektierten Radarstrahlung gemessen. Der Wert der Dämpfung ist proportional zum dekadischen Logarithmus des Quotienten (I₀/I_{refl}).

Die Figur zeigt ein Diagramm der Dämpfung der reflektierten Radarstrahlung in Abhängigkeit der Frequenz der Radarstrahlung. Im Frequenzbereich von 1,03 GHz bis 1,09 GHz, in dem typischerweise die Frequenzen von Radarstrahlung zur Luftraumüberwachung in Flughäfen liegen, ergibt sich eine mittlere Dämpfung von etwa 13 dB.

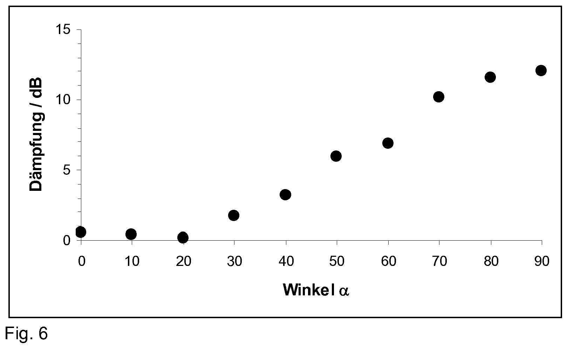

Fig. 6 zeigt das Ergebnis einer weiteren Testmessung der Radarreflexionsdämpfung einer erfindungsgemäßen Verglasung. Das erste Substrat 1 hatte eine Dicke von 8 mm. Das zweite Substrat 2, die erste radarreflektierende Struktur 3 und die zweite radarreflektierende Struktur 4 waren wie in der Testmessung, deren Ergebnis in Figur 5 gezeigt ist, ausgeformt. Das erste Substrat 1 und das zweite Substrat 2 waren so fixiert, dass die beschichteten Oberflächen der Substrate 1, 2 einander zugewandt waren. Der Abstand zwischen den beschichteten Oberflächen wurde durch einen Abstandshalter auf 6 mm eingestellt. Durch Drehung des ersten Substrats 1 um die Verbindungsachse zwischen erstem Substrat 1 und zweitem Substrat 2 wurde der Winkel α zwischen dem elektrischen Feldstärkevektor der Radarstrahlung und der Orientierung der linienförmigen entschichteten Bereichen 5 in Schritten von 10° variiert.

Die Figur zeigt ein Diagramm der mittleren Dämpfung der reflektierten Radarstrahlung im Frequenzbereich von 1,03 GHz bis 1,09 GHz in Abhängigkeit vom Winkel a. Der optimale Wert für die Dämpfung der reflektierten Radarstrahlung ergibt sich für einen Winkel α von 90° und beträgt in dieser Testmessung etwa 12 dB. Bei einer Verkleinerung des Winkels α von 90° auf bis zu 70° nimmt die Dämpfung der reflektierten Radarstrahlung nur geringfügig ab. Im Bereich bis von 70° bis 90° werden sehr vorteilhafte Werte der Dämpfung der reflektierten Radarstrahlung von größer als 10 dB erreicht. Erst bei einem Winkel α von kleiner als 70° nimmt die Dämpfung der reflektierten Radarstrahlung deutlich ab.

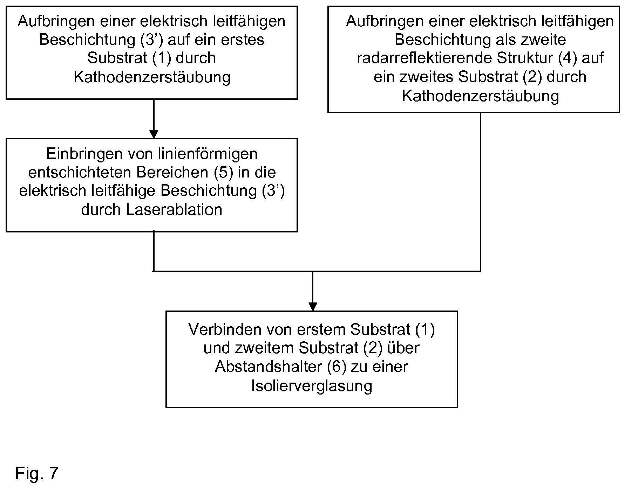

Fig. 7 zeigt ein Flussdiagramm eines Ausführungsbeispiels des erfindungsgemäßen Verfahrens zur Herstellung einer radarreflexionsdämpfenden Verglasung. Auf eine Oberfläche eines ersten Substrats 1 wird durch Kathodenzerstäuben eine elektrisch leitfähige Beschichtung 3' als erste radarreflektierende Struktur 3 aufgebracht. Anschließend werden geradlinige, durchlaufende, in einem Abstand von 31 mm parallel zueinander angeordnete entschichtete Bereiche 5 mit einer Breite von 200 µm durch Laserablation in die elektrisch leitfähige Beschichtung 3' eingebracht. Auf eine Oberfläche eines zweiten Substrats 2 wird durch Kathodenzerstäuben eine elektrisch leitfähige Beschichtung als zweite radarreflektierende Struktur 4 aufgebracht. Anschließend werden das erste Substrat 1 und das zweite Substrat 2 über einen Abstandshalter 6 zu einer Isolierverglasung verbunden, wobei die beschichteten Oberflächen des ersten Substrats 1 und des zweiten Substrats 2 einander zugewandt angeordnet werden. Der Abstand zwischen der elektrisch leitfähigen Beschichtung 3' auf dem ersten Substrat 1 als erste radarreflektierende Struktur 3 und der elektrisch leitfähigen Beschichtung auf dem zweiten Substrat 2 als zweite radarreflektierende Struktur 4 wird durch die Breite des Abstandshalters 6 festgelegt und beträgt 6 mm.

Es war für den Fachmann unerwartet und überraschend, dass eine elektrisch leitfähige Beschichtung 3' durch die erfindungsgemäßen entschichteten Bereiche 5 effektiv als Reflexionsebene eines Jaumann-Absorbers eingesetzt werden kann. Durch die erfindungsgemäßen entschichteten Bereiche 5 wird eine Phasenverschiebung der reflektierten Radarstrahlung hervorgerufen. Außerdem kann durch die entschichteten Bereiche 5 das Amplitudenverhältnis zwischen den beiden an den zwei Reflexionsebenen reflektierten Teilwellen eingestellt werden. Eine weitere Funktionalität der elektrisch leitfähigen Beschichtung 3', beispielsweise eine Sonnenschutzfunktion, wird durch die entschichteten Bereiche 5 nicht oder kaum verringert. Eine funktionelle Beschichtung und eine Reflexionsebene der Radarstrahlung können somit als dasselbe Element realisiert werden und müssen nicht als zwei getrennte Elemente in die Verglasung eingebracht werden. Das ist ein besonderer Vorteil der Erfindung.

### Bezugszeichenliste

- (1): erstes Substrat
- (2): zweites Substrat
- (3): erste radarreflektierende Struktur
- (3'): elektrisch leitfähige Beschichtung
- (4): zweite radarreflektierende Struktur
- (5): entschichteter Bereich
- (6): Abstandshalter
- (7): thermoplastische Zwischenschicht
- (8): Glasscheibe

- (I): außenseitige Oberfläche des ersten Substrats 1
- (II): innenseitige Oberfläche des ersten Substrats 1
- (III): innenseitige Oberfläche des zweiten Substrats 2
- (IV): außenseitige Oberfläche des zweiten Substrats 2

- α: Winkel zwischen elektrischem Feldstärkevektor der Radarstrahlung und der Orientierung der entschichteten Bereiche 5

## Patentansprüche

1. Eine radarreflexionsdämpfende Verglasung, zumindest umfassend:
- ein erstes Substrat (1) und ein flächenmäßig über dem ersten Substrat (1) angeordnetes zweites Substrat (2),
- eine erste radarreflektierende Struktur (3) auf der außenseitigen Oberfläche (I) oder auf der innenseitigen Oberfläche (II) des ersten Substrats (1) und
- eine zweite radarreflektierende Struktur (4) auf der innenseitigen Oberfläche (III) oder auf der außenseitigen Oberfläche (IV) des zweiten Substrats (2),
wobei die erste radarreflektierende Struktur (3) eine elektrisch leitfähige Beschichtung (3') ist, in die linienförmige entschichtete Bereiche (5) eingebracht sind und wobei die Linienbreite der entschichteten Bereiche (5) kleiner oder gleich 1 mm beträgt.

2. Verglasung nach Anspruch 1, wobei die Linienbreite der entschichteten Bereiche (5) kleiner oder gleich 500 µm, bevorzugt kleiner oder gleich 300 µm beträgt.

3. Verglasung nach Anspruch 1 oder 2, wobei die Gesamtfläche aller entschichteten Bereiche (5) kleiner als 5 %, bevorzugt zwischen 0,2 % und 1 % der Fläche der elektrisch leitfähigen Beschichtung (3') beträgt.

4. Verglasung nach einem der Ansprüche 1 bis 3, wobei die entschichteten Bereiche (5) als geradlinige, durchlaufende oder unterbrochene, parallel zueinander angeordnete Streifen ausgeformt sind und wobei der Abstand zweier benachbarter entschichteter Bereiche (5) bevorzugt von 2 mm bis 100 mm, besonders bevorzugt von 20 mm bis 40 mm beträgt.

5. Verglasung nach Anspruch 4, wobei der Winkel α zwischen dem elektrischen Feldstärkevektor der Radarstrahlung und der Orientierung der entschichteten Bereiche (5) von 70° bis 90°, bevorzugt von 80° bis 90° beträgt.

6. Verglasung nach einem der Ansprüche 1 bis 3, wobei die entschichteten Bereiche (5) als Bögen, geschlossene oder offene Kurven, geschlossene Polygone oder offene Polygonzüge, Kreuze, Sterne oder geradlinige Strukturen ausgeformt sind.

7. Verglasung nach einem der Ansprüche 1 bis 6, wobei die elektrisch leitfähige Beschichtung (3') einen Flächenwiderstand von 0,1 Ω/Quadrat bis 200 Ω/Quadrat, bevorzugt von 0,1 Ω/Quadrat bis 30 Ω/Quadrat, besonders bevorzugt von 1 Ω/Quadrat bis 20 Ω/Quadrat aufweist.

8. Verglasung nach einem der Ansprüche 1 bis 7, wobei das erste Substrat (1) und das zweite Substrat (2) über zumindest einen Abstandshalter (6) bevorzugt rundum zu einer Isolierverglasung verbunden sind.

9. Verglasung nach einem der Ansprüche 1 bis 7, wobei das erste Substrat (1) und das zweite Substrat (2) über zumindest eine thermoplastische Zwischenschicht (7) miteinander verbunden sind.

10. Verglasung nach einem der Ansprüche 1 bis 9, wobei die elektrisch leitfähige Beschichtung (3') reflektierende Eigenschaften im Infrarotbereich und / oder im Bereich der Sonneneinstrahlung aufweist und bevorzugt zumindest Silber oder eine silberhaltige Metallegierung enthält und bevorzugt eine Schichtdicke von 10 nm bis 5 µm, besonders bevorzugt von 30 nm bis 1 µm aufweist.

11. Verglasung nach einem der Ansprüche 1 bis 10, wobei das erste Substrat (1) und / oder das zweite Substrat (2) zumindest Glas, bevorzugt Flachglas, Floatglas, Quarzglas, Borosilikatglas, Kalk-Natron-Glas, oder klare Kunststoffe, insbesondere Polyethylen, Polypropylen, Polycarbonat, Polymethylmethacrylat, Polystyrol, Polyamid, Polyester, Polyvinylchlorid und / oder Gemische davon, enthalten.

12. Verglasung nach einem der Ansprüche 1 bis 11, wobei die zweite radarreflektierende Struktur (4) eine flächige elektrisch leitfähige Beschichtung, eine elektrisch leitfähige Beschichtung mit linienförmigen entschichteten Bereichen, aufgedruckte Leiterstrukturen oder auf eine Polymerfolie aufgebrachte dünne Drähte umfasst.

13. Verfahren zur Herstellung einer radarreflexionsdämpfenden Verglasung, wobei zumindest
a) auf ein erstes Substrat (1) eine elektrisch leitfähige Beschichtung (3') mit linienförmigen entschichteten Bereichen (5) als erste radarreflektierende Struktur (3) aufgebracht wird, wobei die Linienbreite der entschichteten Bereiche (5) kleiner oder gleich 1 mm beträgt, und
b) das erste Substrat (1) und ein mit einer zweiten radarreflektierenden Struktur (4) versehenes zweites Substrat (2) flächenmäßig übereinander verbunden werden.

14. Verfahren nach Anspruch 13, wobei in Verfahrensschritt (a) die entschichteten Bereiche (5) durch Laserablation, Plasmaätzen, nasschemisch oder mechanisch in die elektrisch leitfähige Beschichtung (3') eingebracht werden.

15. Verfahren nach Anspruch 13 oder 14, wobei in Verfahrensschritt (b) das erste Substrat (1) und das zweite Substrat (2) über zumindest einen Abstandshalter (6) oder über zumindest eine thermoplastische Zwischenschicht (7) miteinander verbunden werden.

16. Verwendung einer radarreflexionsdämpfenden Verglasung nach einem der Ansprüche 1 bis 12 als Fensterscheibe von Gebäuden oder von Fortbewegungsmitteln für den Verkehr auf dem Lande, in der Luft oder zu Wasser, insbesondere als Fensterscheibe oder Fassadenverkleidung von Hochhäusern in der Umgebung von Flughäfen.

## Claims

1. A radar reflection-damping glazing, comprising at least:
- a first substrate (1) and a second substrate (2) arranged areally above the first substrate (1),
- a first radar reflecting structure (3) on the outside surface (I) or on the inside surface (II) of the first substrate (1), and
- a second radar reflecting structure (4) on the inside surface (III) or on the outside surface (IV) of the second substrate (2),
wherein the first radar reflecting structure (3) is an electrically conductive coating (3'), into which linear decoated regions (5) are introduced, and wherein the line width of the decoated regions (5) is less than or equal to 1 mm.

2. Glazing according to claim 1, wherein the line width of the decoated regions (5) is less than or equal to 500 µm, preferably less than or equal to 300 µm.

3. Glazing according to claim 1 or 2, wherein the total area of all decoated regions (5) is less than 5%, preferably between 0.2% and 1% of the area of the electrically conductive coating (3').

4. Glazing according to one of claims 1 through 3, wherein the decoated regions (5) are formed as rectilinear, continuous or interrupted, mutually parallel strips and wherein the distance between two adjacent decoated regions (5) is preferably from 2 mm to 100 mm, particularly preferably from 20 mm to 40 mm.

5. Glazing according to claim 4, wherein the angle α between the electric field strength vector of the radar radiation and the orientation of the decoated regions (5) is from 70° to 90°, preferably from 80° to 90°.

6. Glazing according to one of claims 1 through 3, wherein the decoated regions (5) are formed as arcs, closed or open curves, closed or open polygons, crosses, stars, or rectilinear structures.

7. Glazing according to one of claims 1 through 6, wherein the electrically conductive coating (3') has sheet resistance of 0.1 Ω/square to 200 Ω/square, preferably from 0.1 Ω/square to 30 Ω/square, particularly preferably from 1 Ω/square to 20 Ω/square.

8. Glazing according to one of claims 1 through 7, wherein the first substrate (1) and the second substrate (2) are preferably connected all around via at least one spacer (6) to form a glazing.

9. Glazing according to one of claims 1 through 7, wherein the first substrate (1) and the second substrate (2) are connected to one another via at least one thermoplastic intermediate layer (7).

10. Glazing according to one of claims 1 through 9, wherein the electrically conductive coating (3') has reflective properties in the infrared range and / or in the range of solar radiation and preferably contains at least silver or a silver-containing metal alloy and preferably has a layer thickness of 10 nm to 5 µm, particularly preferably from 30 nm to 1 µm.

11. Glazing according to one of claims 1 to 10, wherein the first substrate (1) and / or the second substrate (2) contain at least glass, preferably flat glass, float glass, quartz glass, borosilicate glass, soda lime glass, or clear plastics, in particular polyethylene, polypropylene, polycarbonate, polymethyl methacrylate, polystyrene, polyamide, polyester, polyvinyl chloride, and / or mixtures thereof.

12. Glazing according to one of claims 1 through 11, wherein the second radar reflecting structure (4) comprises a planar electrically conductive coating, an electrically conductive coating with linear decoated regions, printed conductor structures, or thin wires applied to a polymer film.

13. Method for producing a radar reflection-damping glazing, wherein at least
a) an electrically conductive coating (3') with linear, decoated regions (5) is applied to a first substrate (1) as the first radar reflecting structure (3), and
b) the first substrate (1) and a second substrate (2) provided with a second radar reflecting structure (4) are connected to one another areally.

14. The method according to claim 13, wherein in step (a) the decoated regions (5) are introduced into the electrically conductive coating (3') by laser ablation, plasma etching, wet-chemically or mechanically.

15. The method according to claim 13 or 14, wherein in step (b), the first substrate (1) and the second substrate (2) are connected to one another via at least one spacer (6) or via at least one thermoplastic intermediate layer (7).

16. Use of a radar reflection-damping glazing according to one of claims 1 through 12 as a window pane of buildings or of means of transportation for travel on land, in the air, or on water, in particular as a window pane or façade cladding of high-rises in the vicinity of airports.

## Revendications

1. Vitrage atténuant la réflexion radar, comportant au moins :
- un premier substrat (1) et un second substrat (2) disposé à plat sur le premier substrat (1) ;
- une première structure de réflexion radar (3) sur la surface côté extérieur (I) ou sur la surface côté intérieur (II) du premier substrat (1) ; et
- une seconde structure de réflexion radar (4) sur la surface côté intérieur (III) ou sur la surface côté extérieur (IV) du second substrat (2),
dans lequel la première structure de réflexion radar (3) est un revêtement (3') conducteur de l'électricité dans lequel sont ménagées des zones (5) dépourvues de revêtement, en forme de ligne, et dans lequel la largeur de ligne des zones (5) dépourvues de revêtement est inférieure ou égale à 1 mm.

2. Vitrage selon la revendication 1, dans lequel la largeur de ligne des zones (5) dépourvues de revêtement est inférieure ou égale à 500 µm, de préférence inférieure ou égale à 300 µm.

3. Vitrage selon l'une des revendications 1 ou 2, dans lequel la surface totale de toutes les zones (5) dépourvues de revêtement est inférieure à 5 %, de préférence entre 0,2 % et 1 % de la surface du revêtement (3') conducteur de l'électricité.

4. Vitrage selon l'une des revendications 1 à 3, dans lequel les zones (5) dépourvues de revêtement sont formées en tant que bandes disposées parallèlement les unes aux autres, rectilignes, continues ou discontinues, et dans lequel la distance entre deux zones (5) dépourvues de revêtement, adjacentes, est, de préférence, de 2 mm à 100 mm, de manière particulièrement préférée de 20 mm à 40 mm.

5. Vitrage selon la revendication 4, dans lequel l'angle α entre le vecteur d'intensité de champ électrique de rayonnement radar et l'orientation des zones (5) dépourvues de revêtement est de 70° à 90°, de préférence de 80° à 90°.

6. Vitrage selon l'une des revendications 1 à 3, dans lequel les zones (5) dépourvues de revêtement sont formées en tant qu'arcs, courbes fermées ou ouvertes, polygones fermés ou tracés polygonaux ouverts, croix, étoiles ou structures rectilignes.

7. Vitrage selon l'une des revendications 1 à 6, dans lequel le revêtement (3') conducteur de l'électricité présente une résistance par carré de 0,1 Ω/carré à 200 Ω/carré, de préférence de 0,1 Ω/carré à 30 Ω/carré, de manière particulièrement préférée de 1 Ω/carré à 20 Ω/carré.

8. Vitrage selon l'une des revendications 1 à 7, dans lequel le premier substrat (1) et le second substrat (2) sont reliés par l'intermédiaire d'au moins un espaceur (6), de préférence tout autour, en un vitrage isolant.

9. Vitrage selon l'une des revendications 1 à 7, dans lequel le premier substrat (1) et le second substrat (2) sont reliés l'un à l'autre par l'intermédiaire d'au moins une couche intermédiaire thermoplastique (7).

10. Vitrage selon l'une des revendications 1 à 9, dans lequel le revêtement (3') conducteur de l'électricité présente des propriétés réfléchissantes dans le domaine infrarouge et/ou dans le domaine du rayonnement solaire et, de préférence, contient au moins de l'argent ou un alliage métallique contenant de l'argent et présente, de préférence, une épaisseur de couche de 10 nm à 5 µm, de manière particulièrement préférée de 30 nm à 1 µm.

11. Vitrage selon l'une des revendications 1 à 10, dans lequel le premier substrat (1) et/ou le second substrat (2) contiennent au moins du verre, de préférence du verre plat, du verre flotté, du verre de quartz, du verre borosilicaté, du verre sodocalcique ou des matières plastiques claires, en particulier du polyéthylène, du polypropylène, du polycarbonate, du poly(méthacrylate de méthyle), du polystyrène, du polyamide, du polyester, du poly(chlorure de vinyle) et/ou des mélanges de ceux-ci.

12. Vitrage selon l'une des revendications 1 à 11, dans lequel la seconde structure de réflexion radar (4) comporte un revêtement conducteur de l'électricité, plat, un revêtement conducteur de l'électricité comportant des zones dépourvues de revêtement, en forme de ligne, des structures conductrices imprimées ou des fils minces appliqués sur un film de polymère.

13. Procédé de fabrication d'un vitrage atténuant la réflexion radar, dans lequel au moins
a) sur un premier substrat (1), un revêtement (3') conducteur de l'électricité comportant des zones (5) dépourvues de revêtement, en forme de ligne, est appliqué en tant que première structure de réflexion radar (3), la largeur de ligne des zones (5) dépourvues de revêtement étant inférieure ou égale à 1 mm ; et
b) le premier substrat (1) et un second substrat (2) doté d'une seconde structure de réflexion radar (4) sont reliés à plat l'un au-dessus de l'autre.

14. Procédé selon la revendication 13, dans lequel, dans l'étape de procédé (a), les zones (5) dépourvues de revêtement sont appliquées par ablation laser, gravure plasma, par voie chimique humide ou mécaniquement, dans le revêtement (3') conducteur de l'électricité.

15. Procédé selon l'une des revendications 13 ou 14, dans lequel, dans l'étape de procédé (b), le premier substrat (1) et le second substrat (2) sont reliés l'un à l'autre par au moins un espaceur (6) ou par au moins une couche intermédiaire thermoplastique (7).

16. Utilisation d'un vitrage atténuant la réflexion radar selon l'une des revendications 1 à 12 en tant que vitre de bâtiments ou de moyens de locomotion pour le transport par voie terrestre, aérienne ou maritime/fluviale, en particulier en tant que vitre ou revêtement de façade d'immeubles dans l'environnement d'aéroports.
